**Europäisches Patentamt**

**European Patent Office**

**Office européen des brevets**

(11) Veröffentlichungsnummer: **0 312 618**

**A1**

## (12) EUROPÄISCHE PATENTANMELDUNG

(21) Anmeldenummer: **87115142.9**

(22) Anmeldetag: **16.10.87**

(51) Int. Cl.4: **E04B 1/94 , E04C 2/26**

(43) Veröffentlichungstag der Anmeldung:
**26.04.89 Patentblatt 89/17**

(84) Benannte Vertragsstaaten:
**AT BE CH DE ES FR GB GR IT LI LU NL SE**

(71) Anmelder: **August Ruhfus GmbH**
**Büdericher Strasse 7 Postfach 980**
**D-4040 Neuss 1(DE)**

(72) Erfinder: **Pohle, Helmut Dr.**
**Brehmstrasse 67**
**D-4000 Düsseldorf 1(DE)**

(54) **Feuerbeständige, isolierte Verbundelemente zur raumabschliessenden Wand- und Deckenverkleidung von Industrie- und Lagerhallen, insbesondere Kühl- und Tiefkühllagern.**

(57) Feuerbeständige, isolierte Verbundelemente zur raumabschließenden, geschoßhohen Wand- und Deckenverkleidung von Industrie- und Lagerhallen, insbesondere Kühl- und Tiefkühllagern, bestehend aus einer beidseitigen Beplankung mit 15 bis 35 mm dicken, faserarmierten Leichtbetonplatten und einem Isolierkern aus Polyurethan-Hartschaum in der Dicke von wahlweise 6o bis 17o mm oder aus Polystyrol in der Dicke von 1oo bis 28o mm. Die Elemente sind witterungsbeständig und eignen sich auch für abgehängte Deckenkonstruktionen. Für den Tiefkühlbereich erhalten sie eine Dampfsperre auf der Außenseite. Die Elemente sind robust und verbinden die Vorteile der Sandwichbauweise mit hohem Dämmvermögen auch dort, wo ein Feuerschutz erforderlich ist. Geeignete Fugenausbildungen und Befestigungsgarnituren werden geboten. Durch ihre Oberflächenbeschichtung sind sie farblich auf Wunsch gestaltbar und weitgehend wartungsfrei. Ihre guten Tragfähigkeiten ermöglichen große Stützabstände.

Die Herstellung erfolgt entweder auf einem kontinuierlichen Produktionsband in 2 alternativ gebotenen Verfahren oder im Torkrettier-Verfahren an der Baustelle.

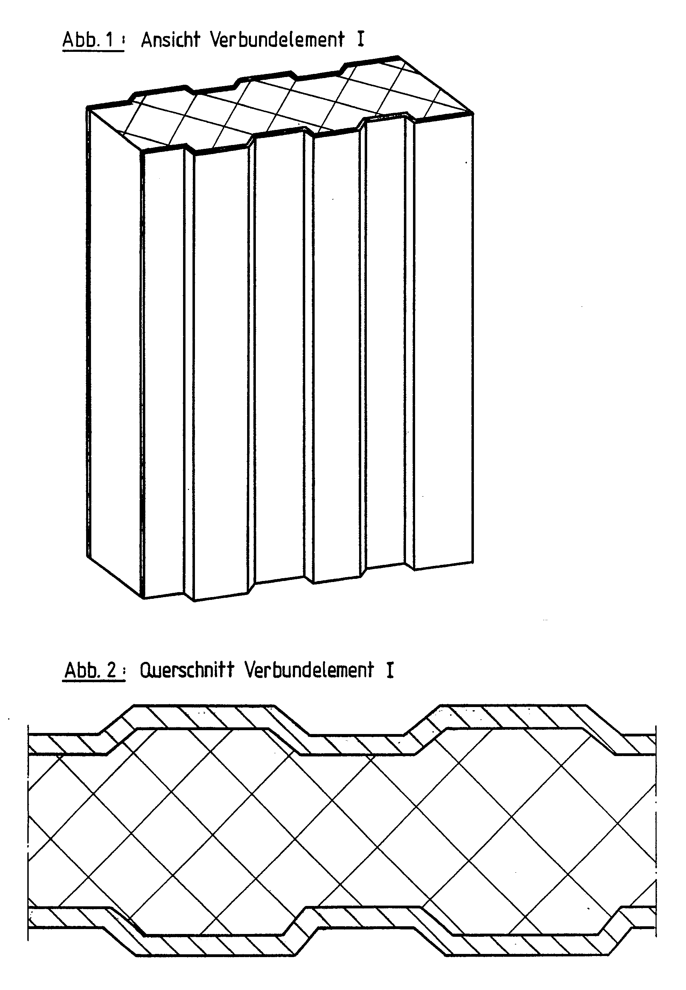

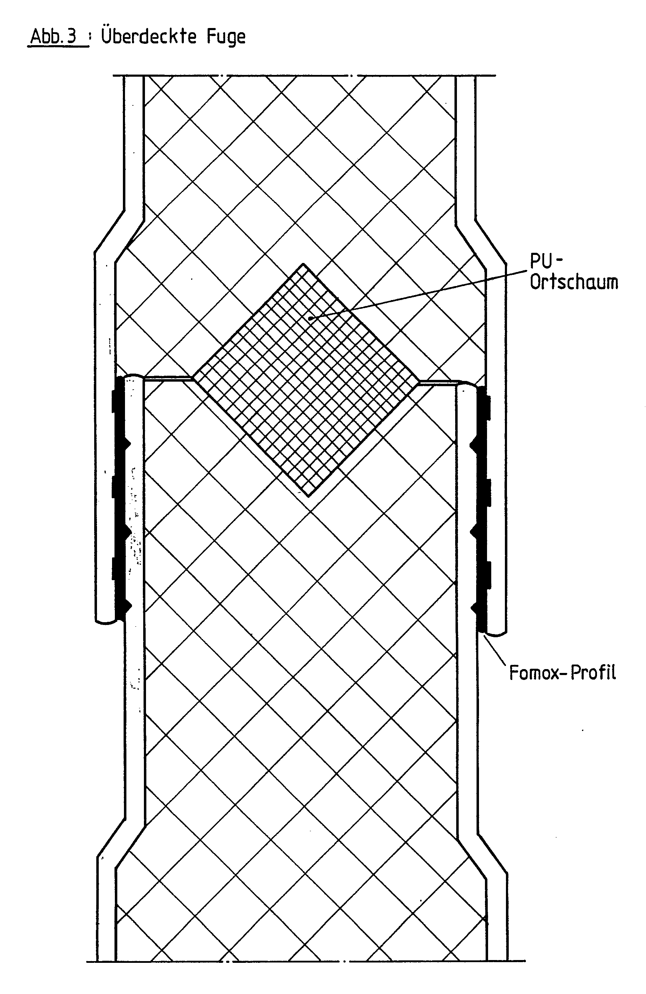

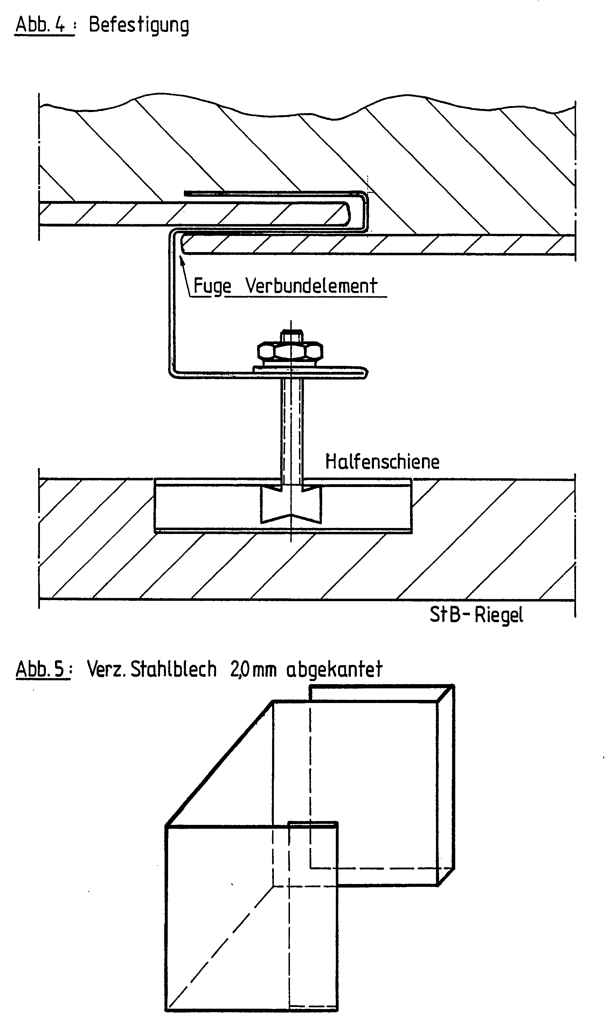

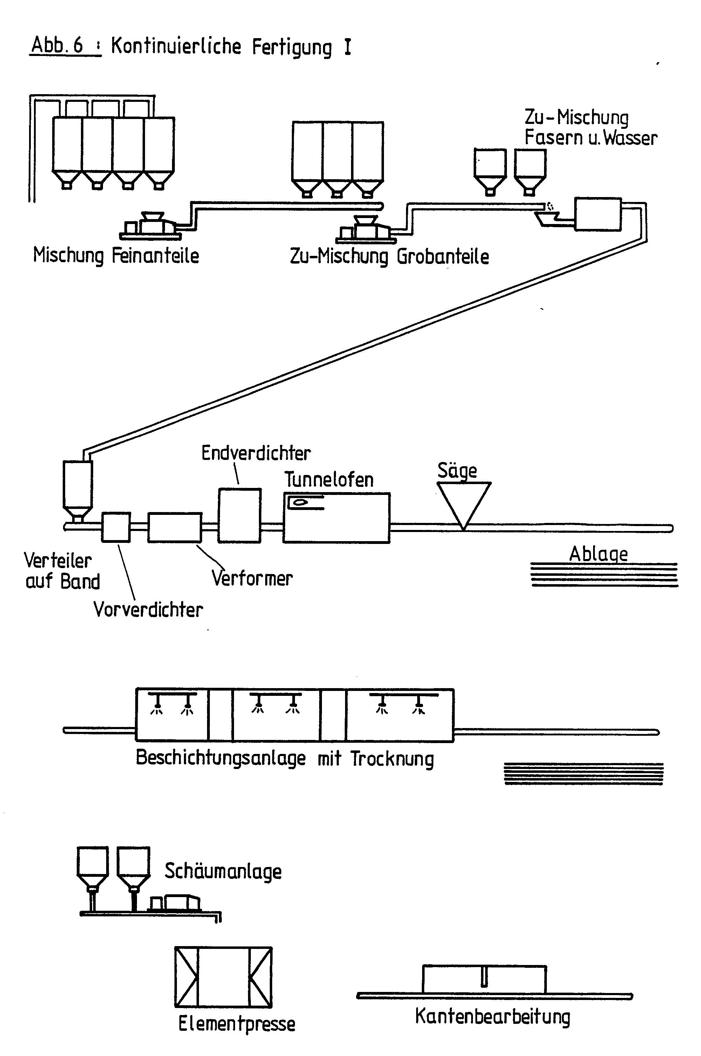

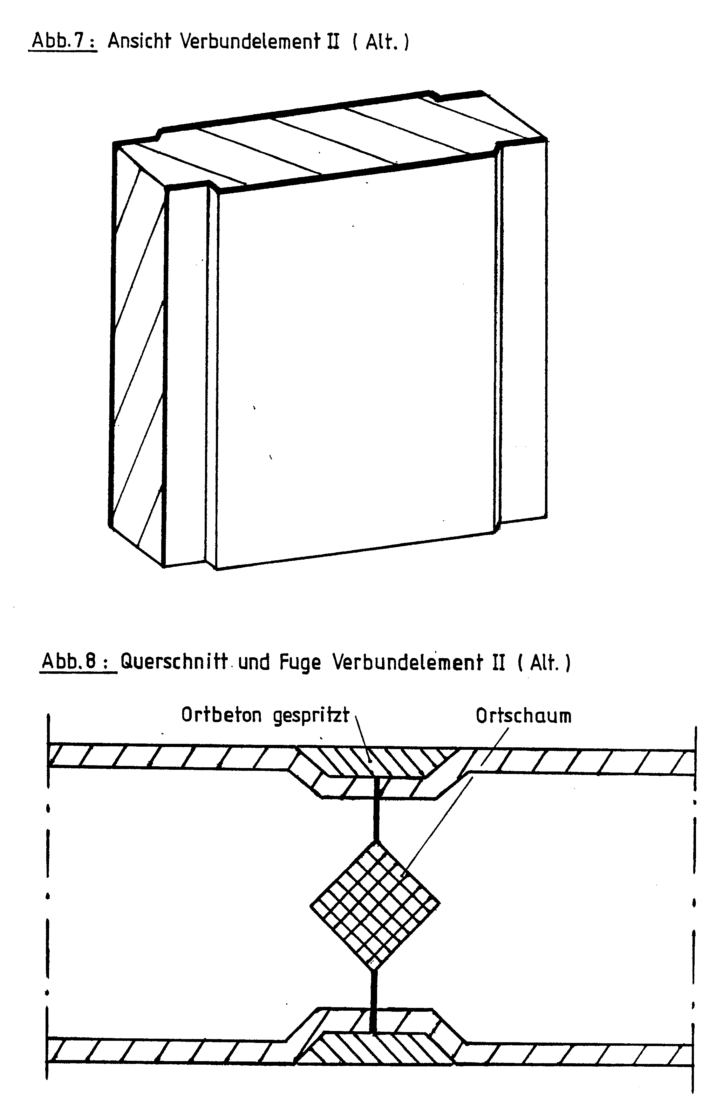

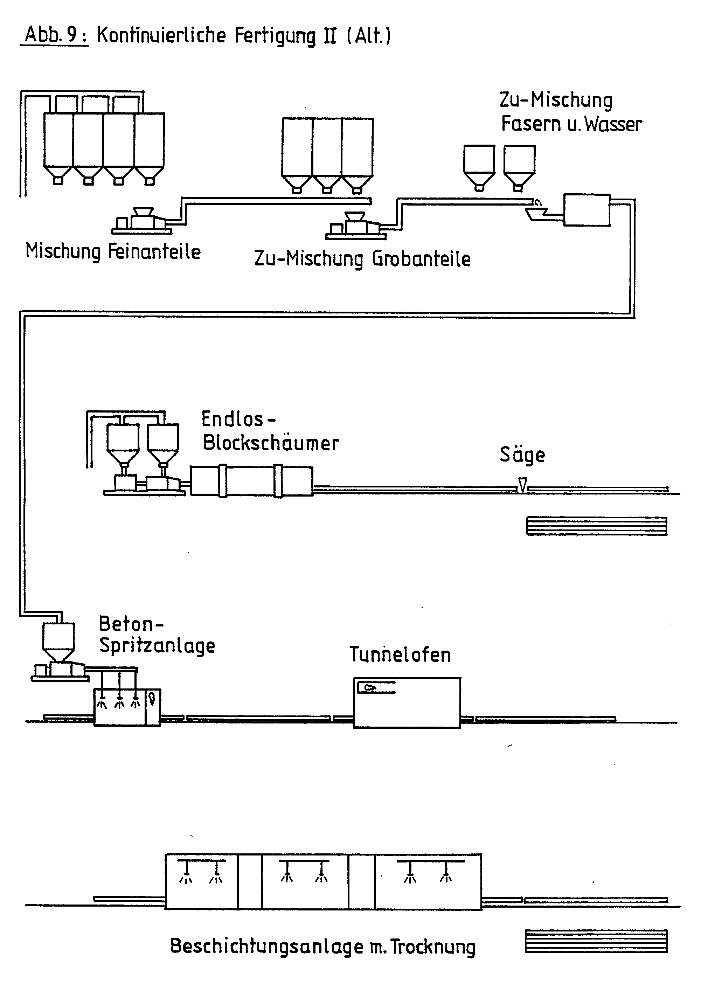

Abb. 1 : Ansicht Verbundelement I

EP 0 312 618 A1

## Feuerbeständige, isolierte Verbundelemente zur raumabschliessenden Wand- und Deckenverkleidung von Industrie- und Lagerhallen, insbesondere Kühl- und Tiefkühllagern

Die Erfindung richtet sich auf die Herstellung geschoßhoher, selbsttragender, isolierter Verbundelemente in feuerbeständiger Ausführung (Sandwich-Bauweise). Sie bestehen aus beidseitig wärmebrückenfrei verbundenen, jeweils 15 bis 35 mm dicken, faserarmierten Leichtbetonplatten und einem Dämmkern aus Polyurethan-Hartschaum von 6o bis 17o mm Dicke oder Polystyrol von 1oo bis 28o mm Dicke je nach gewünschter Isolierung.

Die Elemente sind als Warmfassade oder als Innenschale einer Kaltfassade sowie als Isolierdecke in abgehängter oder aufliegender Ausführung verwendbar. Als Warmdacheindeckung können sie nur eingesetzt werden, wenn zusätzlich eine Dachabdichtung nach den Richtlinien des Dachdeckerhandwerks aufgebracht wird. Vorzugsweise eignen sie sich für raumabschließende Wand- und Deckenkonstruktionen von Industrie- und Lagerhallen, insbesondere von Kühl- und Tiefkühllagern. Weitere Anwendungsgebiete sind der Einsatz als isolierte Brüstungsverkleidungen und Geschoßausfachung, als isolierte Brandschotts und Brandzonenabtrennungen sowie ähnlich gedämmte Konstruktionen, für die ein Feuerschutz vorzunehmen ist. Die Qualität "feuerbeständig" ist definiert als F 9o-AB gemäß DIN 41o2.

Stand der Technik ist die Bauweise mit isolierten, geschoßhohen und selbsttragenden Verbundelementen (Hoesch, Thyssen, EMS, Romakowski, Gabler, Demuth), die eine beidseitige Beplankung aus Stahl- oder Aluminiumblech tragen und in dieser Konstruktionsweise eine Brandklasse B 1 (schwer entflammbar) nach DIN 41o2 erreichen, aber keinen Feuerwiderstand bieten.

Stand der Technik ist außerdem die Herstellung hochverdichteter, faserarmierter Betonplatten (Tunnel und andere Pilkington-Lizenznehmer), deren Abmessungen produktionsbedingt auf die Dimensionen der Presse (ca. 3,oo m) beschränkt sind und daher keinen ausreichenden Feuerschutz und keine wärmebrückenfreie Isolierung bei raumhoher Ausbildung von Lagern und Hallen bieten. Zugleich ist ihre Betonrezeptur nicht geeignet, den Platten in dünner Ausführung von weniger als 4o mm Dicke den angestrebten Feuerwiderstand zu verleihen.

Nach den Vorschriften des Betonhandwerks hat erst eine massive Betonkonstruktion von mindestens 1oo mm Dicke die Qualität feuerbeständig. Da das Brandrisiko grundsätzlich innen und außen angenommen werden muß, sind bei isolierter Ausführung prinzipiell 2 Betonwände von je 1oo mm Dicke erforderlich, deren geschoßhohe Ausbildung technisch und wirtschaftlich unvertretbar ist, wenn keine Wärmebrücken zwischen den beiden Schalen zulässig sind.- Massive Konstruktionen aus Schaum- oder Porenbeton erreichen trotz ihrer verbesserten Isoliereigenschaften nicht die für Kühl- und Tiefkühllager erforderlichen Dämmwerte.

Weiterhin ist es Stand der Technik, feuerbeständige, faserarmierte Beton- und Silikatplatten nach dem Hatscheck-Verfahren herzustellen (Eternit, Promat), das wegen des beschränkten Durchmesser der Hatscheck-Spindel nur maximale Plattenlängen von ca. 3,2o m zuläßt. Die angestellten Versuche, mehrere Silikatplatten zu raumhohen Konstruktionen zusammenzuschließen, gewähren wegen fehlender kraftschlüssiger Verbindung, wenn Wärmebrücken zu vermeiden sind, und wegen der Notwendigkeit, eine fugenlose, bewitterungsfähige Außenhaut anzuordnen - wie auch eine Dampfsperre für den Einsatz im Kältebereich - ebenfalls keinen technisch und wirtschaftlich vertretbaren Ausweg.

Schließlich ist es Stand der Technik, mit Betonplatten beplankte raumhohe Verbundelemente für den Warm- und Kältebereich herzustellen (Fenox), jedoch ist die Betonrezeptur wie auch die Dicke der Platten von ca. 1o mm und die konstruktive Elementausbildung im Fugenbereich nicht geeignet, den angestrebten Feuerschutz F 9o nach DIN 41o2 zu erreichen.

Die Erfindung schafft hier Abhilfe. Zur Herstellung der erfindungsgemäßen Betonplatten wird ein Mörtelanteil von ca. 6o % zugrunde gelegt. Die Feinzuschläge bestehen zu etwa gleichen Volumenanteilen aus Bimsmehl, gemahlenem Tuffstein, Blähtonsand und Flugasche, die Grobanteile ebenfalls zu etwa gleichen Teilen aus Bims, Blähton, Steinkohlen-Schlacke und geschäumten Glas mit Körnungen zwischen 1,5 und 3,5 mm. Als Bindemittel dient Portlandzement der Festigkeitsklasse 45 F oder 55 und wird mit ca. 265 kg je cbm Beton eingesetzt. Unter das trockene Gemenge werden Acrylfasern Dolanit (Hoechst) oder Glasfasern Cemfil (Pilkington) gemischt und danach Wasser mit ca. 18o l je cbm Beton sowie handelsübliche Betonverflüssiger beigefügt. Die erdfeuchte Masse wird auf ein kontinuierlich laufendes Band aufgebracht und mittels Vibratoren und Auflast soweit verdichtet, daß ein 15 bis 35 mm dickes Band mit einer Rohdichte von ca. 1,4 t je cbm Beton entsteht. Vor der Endverdichtung wird die Verformung vorgenommen. Zum raschen Erstarren durchläuft das Betonband anschließend eine Heizzone und wird danach in Platten auf fertiges Baumaß gesägt.

Für die Herstellung von Musterplatten ist auch eine diskontinuierliche Produktionsweise auf Vibrationstischen mittels Formrahmen möglich. Wegen der Kosten der für jedes Baumaß zu ändernden Formen und der Standzeiten der Platten in den Formen ist diese Arbeitsweise jedoch unwirtschaftlich.

Die ausgehärteten Platten werden je nach Verwendungszweck einseitig im 3-Schicht-Verfahren mit einer Desmodur-Desmophen-Beschichtung (D-D von Bayer) versehen oder erhalten nach der Grundierung eine Polyurethan-Pulverbeschichtung. Für den Kältebereich erhalten die Platten zusätzlich nach der Grundierung und vor dem Auftrag der Deckschichten eine Dampfsperre aus Epoxidharzgebundenen Glas- oder Aluminiumflakes.

Die Herstellung der Verbundelemente geschieht in einer Vorrichtung, in der jeweils 2 Platten parallel genau auf den für die erforderliche Dämmstärke notwendigen Abstand gehalten werden und die Randflächen geschlossen werden können. Die Mischung der PU-Komponenten und die Füllung der Form vollzieht sich nach den üblichen Verfahren, um eine Schaumqualität von ca. 45 kg je cbm zu erzielen. Wegen der Standzeit und der diskontinuierlichen Arbeitsweise ist es wirtschaftlich sinnvoll, mit einer mehrstufigen Presse zu arbeiten. Nach dem Ausschalen aus der Presse geschieht die Bearbeitung der Längskanten und die Einfügung von Fomox Pa-Profilen (Bayer) für den paßgenauen Anschluß und Feuerschutz der Fugen.

Die Elemente werden an der Baustelle aufgerichtet und mit in die Fugen eingelegten Befestigungsgarnituren an der Stützkonstruktion im Abstand von ca. 3,5o m befestigt. Nach der Montage wird die Außenfuge mit Silikon-Kautschuk abgedichtet, um das Fomox-Profil vor Bewitterung zu schützen. Beim Einsatz als Isolierdecke bzw. als Dacheindeckung geschieht die Verankerung der Elemente, wenn sie auf der Stützkonstruktion aufliegen, wie bei der Wandverkleidung. In abgehängter Form der Decke werden die Querstöße der Elemente von einer korrosionsbeständigen, kraftschlüssigen Abhängekonstruktion im Abstand von ca. 6,oo m gehaltert.

Im Tieftemperaturbereich werden alle Konstruktionsfugen mit PU-Ortschaum geschlossen und die Tragestäbe der Abhängekonstruktion einisoliert. Die Anschlüsse Boden-Wand und Wand-Decke werden nach den üblichen Vorschriften des Isolierhandwerks wärmebrückenfrei ausgebildet, jedoch erhält jede Anschlußfuge, die einer Brandlast ausgesetzt ist, ein Fomox-Profil, bevor sie geschlossen wird.

Eine andere, "alternative" Produktionsweise und äußere Form der Verbundelemente ergibt sich aus der Eigenschaft der fertigen Betonmischung, spritzbar zu sein. In diesem Spritzverfahren, das dem Material eine hohe Dichte und den angestrebten niedrigen Luftporengehalt verleiht, wird im Werk oder an der Baustelle die Betonmischung mittels einer Spritzmaschine unter hohem Druck fugenlos auf die Innen- und Außenseite des Isoliermaterials aufgebracht und mit einem Glasfaser-Gittergewebe armiert. Die sich im Spritzverfahren ergebende unebene Oberfläche wird mit einem zementgebundenen Putz oder einer Spachtelmasse geglättet. Nach dem Aushärten werden die Oberflächen wiederum im 3-Schicht-Verfahren mit lufttrocknenden Kunstharz-gebundenen Deckschichten versehen. Für den Einsatz im Tieftemperaturbereich wird die erforderliche Dampfsperre aus Epoxidharz-gebundenen Glas- oder Aluminiumflakes nach der Grundierung und vor dem Aufsprühen der Deckschichten aufgebracht. Bei einer werksmäßigen Fertigung der alternativ hergestellten Verbundelemente kann auch eine PU-Pulverbeschichtung vorgenommen werden.

Die alternative Fertigungsweise im Spritzverfahren an der Baustelle eignet sich vorzugsweise für die Herstellung kleinerer oder winklig zueinander geneigter Flächen und Paßstücke oder auch für die Herstellung größerer Flächen, solange die maschinellen Voraussetzungen einer Serienproduktion großformatiger Verbundelemente noch nicht vorhanden sind.

## Ansprüche

1. Feuerbeständige, isolierte Verbundelemente zur raumabschließenden Wand- und Deckenverkleidung von Industrie-und Lagerhallen, insbesondere Kühl- und Tiefkühllagern, bestehend aus einer beidseitigen Beplankung aus faserarmierten Leichtbetonplatten von je 15 bis 35 mm Dicke und einem Isolierkern aus Polyurethan-Hartschaum von 6o bis 17o mm Dicke oder Polystyrol von 1oo bis 28o mm Dicke je nach gewünschter Dämmung. (Abbildung 1, 2).

2. Ausbildung der Konstruktionsfuge als verdeckter Fuge mit einer Überlappung von ca. 5o mm und einer Einlage aus Fomox-Profilen, dadurch gekennzeichnet, daß die Fugenkonstruktion denselben Feuerwiderstand aufweist wie die Verbundelemente gemäß Anspruch 1. (Abbildung 3).

3. Korrosionsbeständige Befestigungsgarnituren zur Verankerung der Verbundelemente als Wandverkleidung an der Stützkonstruktion, dadurch gekennzeichnet, daß bauphysikalisch keine Wärmebrücken in den Verbundelementen entstehen und der Feuerwiderstand der Wandkonstruktion als Ganzes nicht beeinträchtigt wird. (Abbildung 4, 5)

4. Das Verfahren zur kontinuierlichen Herstellung der Beplankungsplatten aus einem Endlosband, von dem die Platten auf fertiges Baumaß gesägt werden, dadurch gekennzeichnet, daß die nach diesem Verfahren hergestellten Platten im Verbund mit der eingeschäumten Isolierung alle notwendigen Eigenschaften für die genannten Einsatzgebiete als selbsttragende, isolierte und feuerbeständige Wand- und Deckenverkleidung aufweisen. (Abbildung 6).

5. Das Verfahren zur Herstellung der selbsttragenden, isolierten und feuerbeständigen Wand- und Deckenverkleidung im Spritzverfahren an der Baustelle, dadurch gekennzeichnet, daß die Isolierung aus vorgefertigten Platten zunächst montiert wird und anschließend die Oberflächen innen und außen fugenlos einen ca. 35 mm dicken Auftrag aus Frisch beton in der Rezeptur wie für die Herstellung der Betonplatten gemäß Anspruch 1 erhalten. Der Gesamtaufbau ist dadurch gekennzeichnet, daß er dieselben Isolier-, Tragfähigkeits- und Feuerwiderstands-Eigenschaften aufweist wie die Verbundelemente gemäß Anspruch 1.

6. Feuerbeständige, isolierte Verbundelemente II (Alternativ) zur raumabschließenden Wand- und Deckenverkleidung von Industrie- und Lagerhallen, insbesondere Kühl- und Tiefkühllagern, bestehend aus einem Isolierblock aus Polyurethan-Hartschaum von 6o bis 17o mm Dicke oder Polystyrol von 1oo bis 28o mm Dicke je nach gewünschter Dämmung, auf den beidseitig eine faserarmierte Leichtbetonmischung nach genauer Rezeptur in einer Dicke von jeweils ca. 3o bis 4o mm aufgespritzt wird (Abbildung 7).

7. Ausbildung der Konstruktionsfuge der Verbundelemente gemäß Anspruch 6 als gestoßene Fuge, über die nach Montage der Elemente an der Baustelle eine Fugenabdeckung aus Leichtbeton in einer Dicke von ca. 35 mm und einer Breite von ca. 12o mm gespritzt wird, dadurch gekennzeichnet, daß die Fugenkonstruktion denselben Feuerwiderstand aufweist wie die Verbundelemente gemäß Anspruch 6 (Abbildung 8).

8. Das Verfahren zur kontinuierlichen werksmäßigen Herstellung der Verbundelemente II (Alternativ) gemäß Anspruch 6 im Spritzverfahren, dadurch gekennzeichnet, daß die auf fertiges Baumaß geschnittenen Elemente alle notwendigen Eigenschaften für die genannten Einsatzgebiete als selbsttragende, isolierte und feuerbeständige Wand- und Deckenverkleidung aufweisen (Abbildung 9).

Abb. 1 : Ansicht Verbundelement I

Abb. 2 : Querschnitt Verbundelement I

Abb.3 : Überdeckte Fuge

PU-
Ortschaum

Fomox-Profil

Abb. 4 : Befestigung

Fuge   Verbundelement

Halfenschiene

StB- Riegel

Abb. 5 : Verz. Stahlblech  2,0 mm abgekantet

Abb.6 : Kontinuierliche Fertigung I

Zu-Mischung
Fasern u. Wasser

Mischung Feinanteile        Zu-Mischung Grobanteile

Endverdichter
Tunnelofen        Säge

Verteiler
auf Band        Verformer        Ablage

Vorverdichter

Beschichtungsanlage mit Trocknung

Schäumanlage

Elementpresse        Kantenbearbeitung

Abb.7 : Ansicht Verbundelement II ( Alt. )

Abb.8 : Querschnitt und Fuge Verbundelement II ( Alt. )

Ortbeton gespritzt        Ortschaum

Abb. 9 : Kontinuierliche Fertigung II (Alt.)

Zu-Mischung
Fasern u. Wasser

Mischung Feinanteile

Zu-Mischung Grobanteile

Endlos-
Blockschäumer

Säge

Beton-
Spritzanlage

Tunnelofen

Beschichtungsanlage m. Trocknung

Europäisches
Patentamt

**EUROPÄISCHER RECHERCHENBERICHT**

Nummer der Anmeldung

EP 87 11 5142

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 984 957 (PIAZZA) <br> * Spalte 2, Zeilen 22-51,60-64; Figuren 1,2 * <br> --- | 1 | E 04 B 1/94 <br> E 04 C 2/26 |
| Y | GB-A- 406 631 (MURET) <br> * Seite 1, Zeilen 9-33,75-85; Figur * | 1 | |
| A | <br> --- | 2 | |
| A | GB-A-1 170 444 (IMPERIAL CHEMICAL) <br> --- | | |
| A | DE-A-3 542 991 (SCHRÖDERS) <br> --- | | |
| A | DE-A-2 912 812 (VEREINIGTE GLASWERKE) <br> --- | | |
| A | DE-A-3 214 291 (WENGER) <br> ----- | | |

| | |
|---|---|
| | **RECHERCHIERTE SACHGEBIETE (Int. Cl.4)** |
| | E 04 C <br> E 04 B |

Der vorliegende Recherchenbericht wurde für alle Patentansprüche erstellt

| Recherchenort | Abschlußdatum der Recherche | Prüfer |
|---|---|---|
| DEN HAAG | 16-06-1988 | VANDEVONDELE J.P.H. |

EPO FORM 1503 03.82 (P0403)